(19) Europäisches Patentamt

European Patent Office

Office européen des brevets

(11) **EP 1 213 071 A2**

(12) **EUROPÄISCHE PATENTANMELDUNG**

(43) Veröffentlichungstag:
12.06.2002 Patentblatt 2002/24

(51) Int Cl.⁷: **B22D 19/04**, F01L 1/047, C22C 37/06

(21) Anmeldenummer: 01129036.8

(22) Anmeldetag: 07.12.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **07.12.2000 DE 10061173**

(71) Anmelder: **Fritz Winter Eisengiesserei GmbH & Co. KG**
**35254 Stadtallendorf (DE)**

(72) Erfinder:
• **Lampic-Opländer, Milan, Dr.**
**35037 Marburg (DE)**
• **Reitmeier, Klaus**
**35260 Stadtallendorf (DE)**
• **Meurer, Horst Dr.-Ing.**
**35274 Kirchhain (DE)**

(74) Vertreter: **Cohausz & Florack**
**Patentanwälte**
**Kanzlerstrasse 8a**
**40472 Düsseldorf (DE)**

(54) **Verfahren, Vorrichtung und Eisengusslegierung zum Herstellen einer Nockenwelle sowie Nockenwelle mit angegossenen Nocken**

(57) Die Erfindung betrifft ein Verfahren, eine Vorrichtung und einen Werkstoff zum Herstellen von Nokkenwellen (W). Darüber hinaus betrifft die Erfindung eine Nockenwelle (W). Erfindungsgemäß werden die Nocken (N1 - N8) der Nockenwelle (W) von außen an ein Rohr (R) angegossen, welches dabei hohl bleibt.

Dabei wird das Gußmaterial so an das Rohr (R) herangeführt, daß die Gefahr eines Verzuges minimiert ist. Durch eine geeignete Gestaltung des Rohres (R) ist zusätzlich sichergestellt, daß die Nocken (N1 - N8) sicher formschlüssig auf dem Rohr (R) gehalten sind. Der Werkstoff weist aufgrund seiner Zusammensetzung eine besonders hohe Härte auf.

Fig. 6

**Beschreibung**

Die Erfindung betrifft ein Verfahren zum Herstellen einer Nockenwelle. Darüber hinaus betrifft die Erfindung eine Vorrichtung zum Herstellen einer Nockenwelle, welche insbesondere zur Durchführung eines solchen Verfahrens geeignet ist.

Einstückig ausgebildete Nockenwellen für Verbrennungsmotoren werden üblicherweise durch Schmieden, Gießen oder Hochdruckumformen erzeugt. Derartige Nockenwellen haben sich in der Praxis seit langem bewährt. Allerdings weisen sie ein hohes Gewicht auf. Zudem sind die Möglichkeiten der Werkstoffauswahl durch die an die Verschleißfestigkeit der Nocken gestellten Anforderungen beschränkt.

Als Alternative zu den einstückig ausgebildeten Nockenwellen werden sogenannte "gebaute" Nockenwellen eingesetzt. Bei diesen Nockenwellen werden die Welle und die Nocken getrennt hergestellt und anschließend zusammengebaut. Dabei werden die Nocken in der Regel aus gesintertem Metall vorgefertigt und auf die üblicherweise aus einem Stahlrohr bestehende Welle geschrumpft. Der Bau derartiger Nockenwellen ist aufwendig. Hinzu kommt, daß solche gebauten Nockenwellen in vielen Anwendungsfällen die an ihre Verschleißfestigkeit gestellten Anforderungen über eine längere Einsatzdauer nicht erfüllen.

Ein weiterer Nockenwellen-Typ ist aus dem Patent Abstracts of Japan: JP 55-103 269 A (JP 0550103269 AA) bekannt. In dieser Druckschrift wird vorgeschlagen, eine aus einem Eisenwerkstoff bestehende Nocke an ein Rohr anzugießen. Zu diesem Zweck wird ein hohles Rohr, in dessen Wand im Bereich des anzugießenden Nockens Öffnungen eingeformt sind, in vertikaler Ausrichtung so in eine aus einem Ober- und einen Unterkasten gebildete Gießform gesetzt, daß eine seiner stirnseitigen Öffnungen an einen in den Oberkasten eingeformten Speiser angeschlossen ist. Gleichzeitig ist die nach unten weisende Öffnung des Rohres durch einen Stopfen verschlossen. Anschließend wird Eisengießwerkstoff in den Speiser gegossen und fließt von dort in den Innenraum des Rohres. Über die in die Rohrwand eingeformten Öffnungen tritt der Gießwerkstoff dabei in den in der Gießform vorhandenen, die Nockenform bestimmenden Hohlraum und füllt diesen aus. Nach der Erstarrung des Gießwerkstoffes sind das Rohr und der Nocken formschlüssig miteinander verbunden, da der Werkstoff des Nockens über die mit Gießwerkstoff ebenfalls ausgefüllten Öffnungen der Rohrwand mit dem den Innenraum des Rohres füllenden Eisenwerkstoff fest verbunden ist. Auf diese Weise ist es zwar möglich, für das Rohr und den Nocken unterschiedliche Werkstoffe zu verwenden. Nachteilig ist allerdings, daß dazu ein erhebliches Gewicht der Nockenwelle in Kauf genommen werden muß.

Die Aufgabe der Erfindung besteht darin, ein Verfahren und eine Vorrichtung anzugeben, mit denen sich auf einfache Weise Nockenwellen fertigen lassen, die hinsichtlich ihrer Gebrauchseigenschaften und hinsichtlich ihres Gewichtes optimiert sind. Darüber hinaus ist ein Werkstoff zu nennen, der in besonderer Weise für die Herstellung von Nockenwellen mit an ein Rohr angegossenen Nocken geeignet ist. Schließlich ist eine Nockenwelle zu schaffen, die hinsichtlich ihrer Materialeigenschaften und ihres Gewichts optimiert ist.

Zum einen wird diese Aufgabe durch ein Verfahren gelöst, bei dem Nocken aus einem Gießwerkstoff von außen an ein hohl bleibendes, vorgefertigtes Rohr angegossen werden. Indem die Nocken von außen an das Rohr angegossen werden, kann anders als beim Stand der Technik vermieden werden, den Innenraum des Rohres mit Gußwerkstoff zu füllen. Auf diese Weise wird eine Nockenwelle erhalten, bei der einerseits der für die Nocken und andererseits der für das Rohr verwendete Werkstoff hinsichtlich der im praktischen Einsatz an die betreffenden Elemente der Nockenwelle gestellten Anforderungen optimiert ist. So kann das Rohr aus einem zähen Stahlwerkstoff vorgefertigt werden, während die Nocken aus besonders hartem, verschleißfesten Gußwerkstoff erzeugt werden. Ebenso ist es möglich, das Rohr in einem ersten Gießschritt aus einem zähen Gußwerkstoff zu fertigen und anschließend in einem weiteren Gießschritt an das vorgegossene Rohr die Nocken anzugießen.

Die Gefahr des Verziehens des Rohres in Folge seiner mit dem Angießen der Nocken verbundenen abschnittsweisen Erwärmung kann dadurch reduziert werden, daß die Nocken in mindestens zwei Gruppen mit einer gleichen Anzahl von Nocken aufgeteilt werden und daß die Nocken der einen Gruppe gemeinsam über einen ersten Zulauf und die Nocken der anderen Gruppe gemeinsam über einen zweiten Zulauf mit Gießwerkstoff versorgt werden. Durch die jeweilige gemeinsame Versorgung der den Gruppen zugeordneten Nocken ist sichergestellt, daß sich das Rohr im Bereich dieser Nocken gleichmäßig erwärmt. Dabei ist es günstig, wenn die Nocken der Gruppen in Untergruppen aufgeteilt sind und benachbart zu jeder Untergruppe der einen Gruppe mindestens eine Untergruppe der anderen Gruppe positioniert ist. Auf diese Weise lassen sich Verformungen des Rohres zielgerichtet ausgleichen, die durch die infolge der unterschiedlichen Ausrichtung der Nocken in den verschiedenen Abschnitten unterschiedlich schnell und intensiv erfolgende Erwärmung verursacht werden. Bei Nockenwellen, bei denen jedem Zylinder des Verbrennungsmotors jeweils ein Nockenpaar zugeordnet ist, ist es in diesem Zusammenhang günstig, wenn die Untergruppen durch jeweils ein solches Paar von benachbart zueinander angeordneten Nocken gebildet sind. Dabei kann ein besonders wirkungsvoller Ausgleich der Verformungen dadurch erfolgen, daß die Untergruppen der einen Gruppe und die Untergruppen der anderen Gruppe abwechselnd aufeinander folgend längs des Rohres angeordnet sind.

Eine weitere Verminderung der Gefahr eines Verzuges kann dadurch erreicht werden, daß die Rohre an ihren Enden während des Gießens jeweils über eine mindestens dem Doppelten ihres Außendurchmessers entsprechenden Länge gehalten werden.

In solchen Fällen, in denen nach dem Gießen der Nocken an das Rohr Endstücke, wie Ritzel, Zahnscheiben etc. angeschlossen werden müssen, ist es günstig, ein solches Anschlußelement mit dem Rohr durch Buckelschweißung zu verbinden. Dieses an sich bekannte Schweißverfahren ermöglicht es auf einfache Weise, eine präzise ausgerichtete Verbindung zwischen dem Rohr und dem betreffenden Endstück herzustellen.

Für das Angießen der Nocken an das Rohr eignet sich in besonderer Weise eine Eisengußlegierung, welche neben Eisen und üblichen Verunreinigungen (in Gewichts-%) 3,5 - 3,7 % C, 0,9 - 1,1 % Si, ≤ 0,15 % S, ≤ 1 % Mn, sowie nicht an Schwefel gebundenes La mit einem Anteil von 0,02 - 0,05 % aufweist und wahlweise eines oder mehrere der folgenden Legierungselemente enthält: 0,3 - 0,6 % Cr, 0,1 - 1,0 % Cu, 0,3 - 0,6 % Mo, 0,02 - 0,05 % Ti.

Bei der erfindungsgemäß verwendeten Gußlegierung ist die chemische Zusammensetzung so gewählt, daß das Graphitisierungspotential $P_G$ die Gleichung

$$P_G < 0,314 \, M^{-0,582}$$

erfüllt ist. Mit "M" ist dabei das "Erstarrungsmodul" oder einfach "Modul" eines mit Gießwerkstoff ausgefüllten Volumens bezeichnet, welches sich wie folgt ergibt:

$$M = \frac{\text{mit Gießwerkstoff gefülltes Volumen}}{\text{wärmeführende Oberfläche des gefüllten Volumens}}$$

Im Fall eines gegossenen Nockens ergibt sich das Erstarrungsmodul folglich zu:

$$M = \text{Nocken Volumen} / \text{wärmeführende Nockenoberfläche}$$

Das Erstarrungsmodul eines Gußstücks drückt somit dessen Verhältnis von Volumen zur wärmeführenden Oberfläche unter Berücksichtigung zusätzlicher Kühleffekte aus, die verschieden von den Effekten sein können, die bei der Abkühlung an ruhender Luft auftreten. Das Modul ist dabei im Idealfall identisch mit dem aufgrund einer Messung der Erstarrungszeit $t_{Erstarrung}$ aus der nachfolgenden Beziehung:

$$t_{Erstarrung} = M^2 \, k_{Solidus},$$

wobei mit $k_{Solidus}$ eine für jeden Werkstoff ermittelte Konstante bezeichnet ist.

Der erfindungsgemäßen Legierung wurde Lanthan zum einen mit dem Ziel zugegeben, die Härte des Werkstoffs zu steigern und eine das tribologische Verhalten verbessernde Kornfeinung zu bewirken. Lanthan senkt die Aktivitäten des Kohlenstoffs im Gußeisen und fördert so die carbidische Erstarrung. Dabei kann das Eisencarbid $Fe_3C$ bis zu 0,01 % Lanthan lösen. Auf diese Weise wird die Härte des Zementits deutlich gesteigert, so daß die aus dem erfindungsgemäßen Werkstoff gegossenen Nocken Härtewerte erreichen, die zwischen 60 und 70 HRC liegen. Besonders günstig ist es in diesem Zusammenhang, wenn die Gehalte an Sauerstoff auf 0,007 % und Schwefel auf maximal 0,03 % beschränkt werden. Ist dies der Fall, so tritt der gewünschte härtesteigernde Effekt des Lanthans schon bei Gehalten auf, die 0,04 bis 0,05 Gew.-% betragen. Das hervorragende tribologische Verhalten der aus einem erfindungsgemäß verwendeten Werkstoff gegossenen Nocken wird durch die Feinung des Zementits bzw. Ledeburits aufgrund der Keimwirkung der Deoxidationsprodukte des Lanthans erreicht.

Zum anderen wurde Lanthan zum Erhalt der Eigenschaften des erfindungsgemäß verwendeten Werkstoffs gewählt. Die beim Gießen von Nockenwellen der in Rede stehenden Art nach jedem Gießvorgang verbleibenden relativ großen Mengen an Gußwerkstoff werden üblicherweise wieder eingeschmolzen, so daß sie für folgende Gießvorgänge genutzt werden können. Die besondere Eigenschaft von Lanthan besteht dabei darin, daß dieses Element beim Einschmelzen vollständig abbrennt. Indem bei jedem Einschmelzvorgang der Lanthan-Gehalt im vollen Umfang neu zugesetzt wird, kann der mit jedem Recyclingdurchgang einhergehende Verlust der Qualität der Eigenschaften des Gußwerkstoffs auf ein Minimum reduziert werden.

Die voranstehend genannte Aufgabe wird auch durch eine Vorrichtung zur Herstellung einer Nockenwelle, bei der die Nocken an ein hohles Rohr angegossen sind, gelöst, welches mit einer aus einem Ober- und einem Unterkasten gebildeten Form ausgestattet ist, in der mittels eines Formstoffs, insbesondere Formsand, eine Aufnahme für ein vorgefertigtes Rohr und die Hohlformen für die an das Rohr anzugießenden Nocken ausgebildet sind, wobei die Hohlformen in mindestens zwei Gruppen von gleicher Anzahl aufgeteilt sind und die jeweils einer dieser Gruppen zugeordneten Hohlformen gemeinsam über einen Zulauf mit Gießwerkstoff versorgt werden. Wie im Zusammenhang mit dem erfindungsgemäßen Verfahren erläutert, ist durch die gruppenweise Zuordnung der Hohlräume, in denen die Nocken erzeugt werden, zu jeweils einem Zulauf die Gefahr eines Verzuges des Rohres in Folge der mit dem Angießen der Nocken verbundenen Erwärmung auf ein Minimum reduziert.

Selbstverständlich können die Hohlräume in üblicher Weise über Anschnitte, Speiser und Speiserhälse mit dem ihnen jeweils zugeordneten Zulauf verbunden sein. Für eine besonders gleichmäßige Füllung jedes einzelnen Hohlraums ist es dabei günstig, wenn jeder Hohlraum über eine auf der dem jeweiligen Speiser gegenüberliegenden Seite des Rohres angeordneten Entlüftungsöffnung entlüftbar ist.

Aus den schon im Zusammenhang mit dem erfindungsgemäßen Verfahren erläuterten Gründen ist eine im Hinblick auf die Minimierung des Verzuges besonders vorteilhafte Ausgestaltung einer erfindungsgemäßen Vorrichtung dadurch gekennzeichnet, daß die Hohlräume jeder Gruppe in Untergruppen aufgeteilt sind und benachbart zu jeder Untergruppe der einen Gruppe mindestens eine Untergruppe der anderen Gruppe positioniert ist. Bei solchen Nockenwellen, bei denen die Nocken jeweils paarweise einem Zylinder des Verbrennungsmotors zugeordnet sind, ist es zudem günstig, wenn die Untergruppen durch jeweils ein Paar von benachbart angeordneten Hohlräumen gebildet sind. Dabei kann die Änderung der Form des Rohres dadurch besonders wirkungsvoll minimiert werden, daß die Untergruppen der einen Gruppe und die Untergruppen der anderen Gruppe abwechselnd aufeinander folgend längs des Rohres angeordnet sind. Um die Verzugsgefahr weiter zu senken, ist die erfindungsgemäße Vorrichtung zudem vorzugsweise so ausgebildet, daß die Rohre in der Aufnahme an ihren Enden über eine mindestens dem Doppelten ihres Außendurchmessers entsprechende Länge von Formstoff umgeben ist.

Der Entstehung von Lunkern kann dadurch entgegen gewirkt werden, daß das Modul eines jeden Speisers mindestens gleich dem Doppelten des Moduls der ihm zugeordneten, an das Rohr anzugießenden Nocke ist. Auf diese Weise kann der Speiser seine Aufgabe, die Schrumpfung der Nocke beim Abkühlen des flüssigen Metalls auszugleichen, sicher erfüllen. Begünstigt werden kann dies dadurch, daß die in einer erfindungsgemäßen Vorrichtung vorgesehenen Speiser in Richtung des jeweiligen Hohlraums sich konisch aufweitend ausgebildet sind. Zudem sollte der Modul des Speiseranschnitts kleiner und der Modul des Speisehalses größer sein als der Modul der über diese Elemente mit Gießwerkstoff versorgten, an das Rohr anzugießenden Nocke.

In Bezug auf die Nockenwelle wird die voranstehend genannte Aufgabe dadurch gelöst, daß die Nocken von außen an ein hohl bleibendes Rohr angegossen sind. Eine solche vorzugsweise nach dem erfindungsgemäßen Verfahren hergestellte Nockenwelle zeichnet sich durch ein geringes Gewicht und die Möglichkeit einer hinsichtlich der jeweiligen Belastungen optimierten Werkstoffzusammenstellung aus.

Um eine sichere Verbindung zwischen dem beispielsweise aus einem kaltverformten Stahlmaterial oder als Gußstück vorgefertigten Rohr zu gewährleisten, ist es zweckmäßig, wenn an dem Rohr radial umlaufende Angußabschnitte für die Nocken ausgebildet sind. Im Bereich dieser Angußabschnitte können die Rohre problemlos so vorbereitet werden, daß einerseits der Entstehung von Rissen in den angegossenen Nocken vorgebeugt und andererseits der sichere Sitz der gegossenen Nocken auf dem Rohr gewährleistet ist.

Das Reißen der Nocken während des Erstarrens oder im erstarrten Zustand kann dabei dadurch verhindert werden, daß im Bereich der Angußabschnitte in das Rohr jeweils eine Nut eingeformt ist, um die Wandstärke des Rohres im Bereich der Angußabschnitte zu vermindern. Im Bereich der Angußabschnitte weist das Rohr dann einen gegenüber dem Außendurchmesser außerhalb dieser Ausschnitte verminderten Durchmesser auf. Auf diese Weise ist die durch die Wärmezufuhr während des Angießens der Nocken verursachte Ausdehnung des Rohres im Bereich der Angußabschnitte so auf die mit der Schrumpfung des Nockens aufgrund der parallel ablaufenden Erkaltung des Gießwerkstoffs abgestimmt, daß keine übermäßigen Spannungen im das Rohr umgebenden Bereich des Nockens entstehen. Gleichzeitig ermöglicht es die Verminderung der Wandstärke im Bereich der Angußabschnitte, den Außendurchmesser des Rohres im Bereich der Angußabschnitte und das Schrumpfungsverhalten des jeweiligen Nockens so aufeinander abzustimmen, daß nach dem Erstarren ein ausreichend fester Sitz des Nockens auf dem Rohr gewährleistet ist. Es hat sich gezeigt, daß ein Reißen sicher vermieden und ein fester Sitz ebenso sicher gewährleistet werden kann, wenn das Verhältnis des Erstarrungsmoduls der Nocken zum Durchmesser des Rohres im Bereich des jeweiligen Angußabschnitts 3,5 bis 5,5 beträgt.

Der Entstehung von Rissen im Nocken wird auch dadurch vorgebeugt, daß der Umfang des Rohres außerhalb der Angußabschnitte fließend in den Grund der Angußabschnitte übergeht. Durch einen solchen fließenden Übergang ist sichergestellt, daß keine scharfen Kanten in den Nockenwerkstoff dringen, die andernfalls den Ausgangspunkt für die Entstehung von Spannungsrissen darstellen könnten.

Ein verdrehsicherer, formschlüssiger Sitz der auf das vorgefertigte Rohr angegossenen Nocken kann in einem ersten Schritt dadurch gewährleistet werden, daß der äußere Umfang des Rohres im Bereich der Angußabschnitte im Querschnitt einen von der Kreisform abweichenden Verlauf aufweist.

Zusätzlich verbessert werden kann der formschlüssige Halt des Nockens auf dem Rohr dadurch, daß im Bereich der Angußabschnitte durch Abtrag von Werkstoff am Umfang des Rohres jeweils mindestens eine Abflachung ausgebildet ist. Es hat sich gezeigt, daß ein optimal fester Sitz des Nockens dabei dadurch erreicht werden kann, daß die Tiefe der Abflachung gegenüber dem nicht abgeflachten Umfang des Rohres im Bereich der Angußabschnitte 1/4 bis 1/3 der Wandstärke des Rohres im nicht abgeflachten Bereich der Angußabschnitte beträgt.

Eine weitere Sicherung des formschlüssigen Sitzes der Nocken auf dem Rohr kann dadurch bewerkstelligt werden, daß im Bereich der Angußabschnitte Sacklocheinsenkungen von außen in das Rohr eingeformt sind. Bei geeigneter Auslegung der Tiefe dieser Sacklöcher kommt es beim Eindringen des schmelzflüssigen Gießmetalls im Bereich des Grundes der Einsenkung zum Aufschmelzen des Rohrwerkstoffes, so daß zusätzlich zum Formschluß ein stoffschlüssiger Halt des Nockens auf dem Rohr hergestellt ist. Dieser Effekt kann dadurch gefördert werden, daß die Tiefe der Sacklochbohrungen gegenüber dem nicht abgeflachten Umfang des Rohres im Bereich der Angußabschnitte 2/3 bis 3/4 der Wandstärke des Rohres im nicht abgeflachten Bereich der Angußabschnitte beträgt.

Eine zur Herstellung eines sicheren formschlüssigen Halts zur voranstehend erläuterten Variante alternativ oder ergänzend einsetzbare Ausgestaltung einer erfindungsgemäßen Nockenwelle ist dadurch gekennzeichnet, daß im Bereich der Angußabschnitte sich im wesentlichen über die Breite der Angußabschnitte erstreckende und über den Umfang des Rohres verteilte Vertiefungen in das Rohr eingeformt sind. Dabei ist es zudem günstig, wenn zwischen den Vertiefungen jeweils spitz zulaufende Erhebungen ausgebildet sind. Bei einer solchen verzahnungsartigen Ausbildung der Umfangsflächen der Angußabschnitte schmelzen die Spitzen der Erhebungen beim Angießen der Nocken ebenfalls auf, so daß es auch dort zusätzlich zu der formschlüssigen Verbindung zu einem Stoffschluß zwischen Rohr und Nocke kommt. Es hat sich herausgestellt, daß diese kombinierte stoff- und formschlüssige Verbindung dann sicher erreicht werden kann, wenn die Tiefe der Vertiefungen gegenüber dem nicht abgeflachten Umfang des Rohres im Bereich der Angußabschnitte 1/3 bis 1/2 der Wandstärke des Rohres im nicht abgeflachten Bereich der Angußabschnitte beträgt. Die Vertiefungen und Erhebungen lassen sich beispielsweise durch Rändel-Drücken oder --Fräsen erzeugen.

Nachfolgend wird die Erfindung anhand einer ein Ausführungsbeispiel darstellenden Zeichnung näher erläutert. Es zeigen:

Fig. 1     einen Teil einer Gießform in einer Ansicht von oben,

Fig. 2     ein für die Herstellung einer Nockenwelle vorgefertigtes Rohr in seitlicher Ansicht,

Fig. 3     das Rohr in einem Schnitt entlang der in Fig. 2 eingetragenen Linie A-A,

Fig. 4     das Rohr in einem Schnitt entlang der in Fig. 2 eingetragenen Linie B-B,

Fig. 5     einen Ausschnitt X der Fig. 2 in vergrößerter Ansicht,

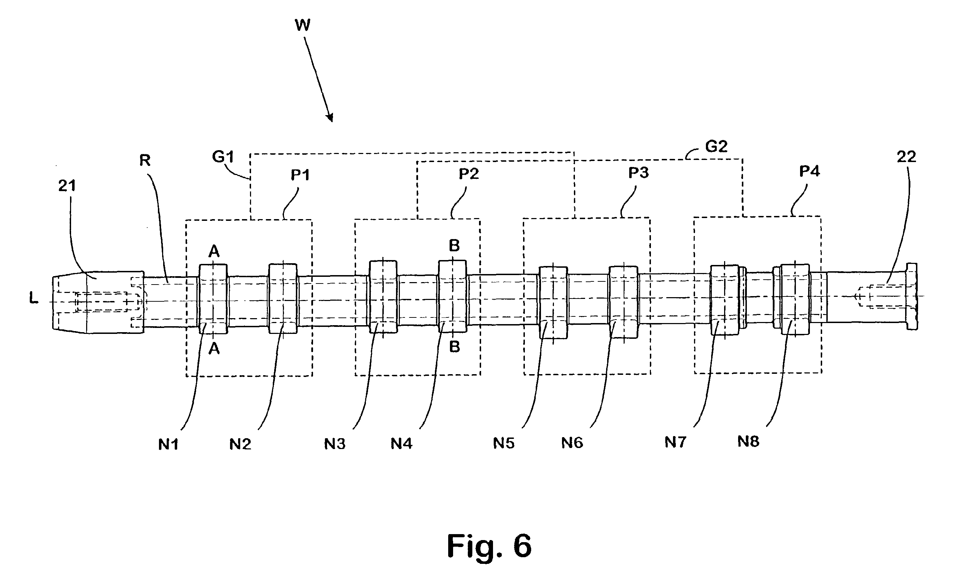

Fig. 6     eine aus dem Rohr gefertigte Nockenwelle in seitlicher Ansicht,

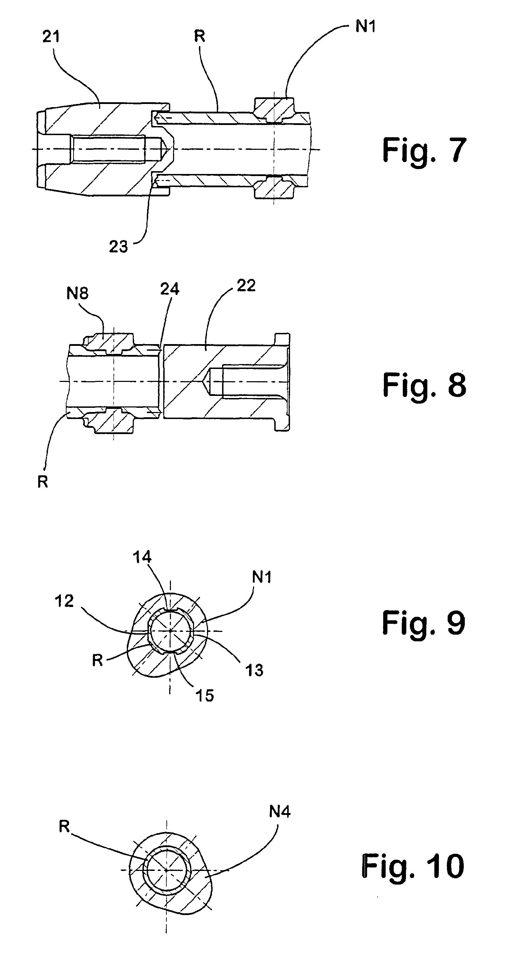

Fig. 7     einen Endabschnitt der Nockenwelle in einem Längsschnitt,

Fig. 8     den anderen Endabschnitt der Nockenwelle in einem Längsschnitt,

Fig. 9     die Nockenwelle in einem Schnitt entlang der in Fig. 6 eingetragenen Linie A-A,

Fig. 10    die Nockenwelle in einem Schnitt entlang der in Fig. 6 eingetragenen Linie B-B.

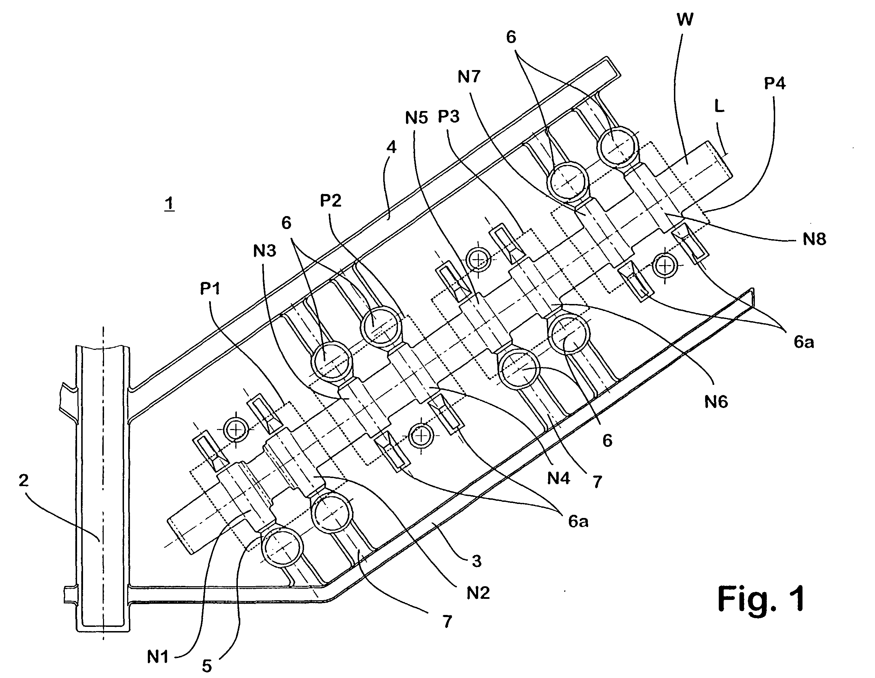

Die in Fig. 1 gezeigte Gießform 1 ist für die Herstellung der zur Verdeutlichung in Fig. 1 eingezeichneten Nockenwellen W bestimmt, die in einem mit jeweils vier Ventilen pro Zylinder ausgestatteten, hier nicht dargestellten Vierzylinder-Motor eingesetzt werden soll. Die Nockenwelle W weist dementsprechend vier Untergruppen P1,P2,P3,P4 von jeweils einem Paar von Nocken N1 - N8 auf. Jedes Nockenpaar einer der Gruppen P1 - P4 ist dabei einem der Zylinder des nicht gezeigten Motors zugeordnet.

Im Formsand der Gießform 1 ist ein zentraler Versorgungskanal 2 ausgebildet, von dem Zuläufe 3,4 abgehen. Dabei verläuft der erste Zulauf 3 zunächst im rechten Winkel zum Versorgungskanal 2 und knickt dann in einen auf der einen Seite der Nockenwelle W parallel zu deren Längsachse L sich erstreckenden Verlauf ab, während der andere Zulauf 4 unmittelbar vom Versorgungskanal 2 ausgehend auf der anderen Seite der Nockenwelle W parallel zur Längsachse L verläuft.

Entsprechend der Verteilung und Form der Nocken N1 - N8 sind in die Form hier im einzelner der Deutlichkeit wegen nicht eingezeichnete Hohlformen ausgebildet. Diese Hohlformen sind in Untergruppen aufgeteilt, deren Verteilung den Untergruppen P1 - P4 der Nocken N1 - N4 entspricht. Die für die Erzeugung der Nocken N1,N2 sowie N5,N6 bestimmten Untergruppen von Hohlformen werden gemeinsam über den Zulauf 3 mit Gußwerkstoff versorgt werden. Demgegenüber werden die zur Erzeugung der Nocken N3,N4 sowie N7,N8 erforderlichen Untergruppen von Hohlräumen über den Zulauf 4 mit Gußwerkstoff gespeist. Die Untergruppen P1,P3 bilden somit eine Gruppe G1 von Nocken N1,N2,N5,N6, welche gemeinsam aus über den Zulauf 3 in die entsprechenden Hohlräume der Gießform 1 geleiteten Gußwerkstoff erzeugt werden, während die Untergruppen P2,P4 eine zweite Gruppe G2 von Nocken N3,N4,N7,N8 bilden, die gemeinsam aus über den Zulauf 4 zugeleiteten Gußwerkstoff erzeugt werden.

Dabei sind die Untergruppen P1 - P4 in abwechselnder Folge derart angeordnet, daß in Längsrichtung der Nockenwelle W auf eine an den Zulauf 3 angeschlossene Gruppe P1 bzw. P3 jeweils eine an den Zulauf 4 angeschlossene Gruppe P2 bzw. P4 folgt.

Die für die Erzeugung der Nocken N1 - N8 benötigten Hohlräume sind jeweils über Speiserhälse 5, Speiser 6 und Anschnitte 7 an den jeweiligen Zulauf 3 bzw. 4 angeschlossen. Über jeweils auf der dem jeweiligen Speiser 6 gegenüberliegenden Seite der Nockenwelle W angeordnete Entlüftungsöffnungen 6a kann die in dem jeweiligen Hohlraum enthaltene Luft beim Einströmen von Gußwerkstoff entweichen.

Die Speiser 6 haben die Aufgabe, die Schrumpfung der jeweiligen Nocke N1 - N8 beim Abkühlen des Gießwerkstoffs während des Übergangs von der flüssigen in die feste Phase auszugleichen. Weil dieser Vorgang sehr schnell abläuft, müssen die Speiser 6 vor allem für den notwendigen ferrostatischen Druck sorgen. Die Auslegung der Speiser 6 richtet sich daher nach der durch den Erstarrungsmodul charakterisierten Gestalt der jeweils zu speisenden Nocke N1 - N8.

Legt man beispielsweise einen Modul der Nocken N1 - N8 von jeweils 0,375 cm zugrunde, so beträgt der Modul des zugehörigen Speisers 6 mindestens das Doppelte, also mindestens 0,75 cm. Dies entspricht einem Zylinder mit einem Durchmesser von 3,5 cm und einer Höhe von 8 cm. Für einen ausreichenden ferrostatischen Druck ist die Höhe des Zylinders von der Teilung der Gießform 1 aus mindestens doppelt so groß wie die Höhe der jeweiligen Nocke N1 - N8 gemessen ausgehend vom Mittelpunkt des Grundkreises der Nocke N1 - N8. Besonders günstig ist es in diesem Zusammenhang, wenn die Speiser 6 konisch ausgebildet sind, wobei der obere Durchmesser der Speiser 6 vorzugsweise etwa gleich dem Fünffachen des Moduls der jeweiligen Nocke N1 - N8 ist, im hier betrachteten Beispiel also mindestens 1,8 cm beträgt. Die Höhe der Speiser 6 steht dabei ebenfalls im Verhältnis 5:1 zu seinem oberen Durchmesser, so daß die Speiserhöhe im betrachteten Fall mindestens 9 cm beträgt. Der untere Durchmesser der Speiser 6 ist demgegenüber beispielsweise um das Vierfache des Moduls der jeweiligen Nocken N1 - N8 größer als der obere Durchmesser, so daß er im hier betrachteten Beispiel bei etwa 3,3 cm liegt. Der Modul des jeweiligen Anschnitts 7 ist kleiner und der Modul des jeweiligen Speiserhalses 5 größer als der Modul der zugeordneten Nocke N1 - N8.

Das Rohr R, an welches die Nocken N1 - N8 in der Gießform 1 angegossen werden, ist beispielsweise aus einem kaltverformten Stahlmaterial vorgefertigt worden. In umlaufenden Angußabschnitten A1 - A8 des Rohres R, in deren Bereich die Nocken N1 - N8 angegossen werden sollen, ist die normale Wandstärke $S_n$ des Rohres R auf eine Wandstärke S vermindert. Zu diesem Zweck sind in den Angußabschnitten A1 - A8 umlaufende Nuten 8,9 in das Rohr R eingestochen worden.

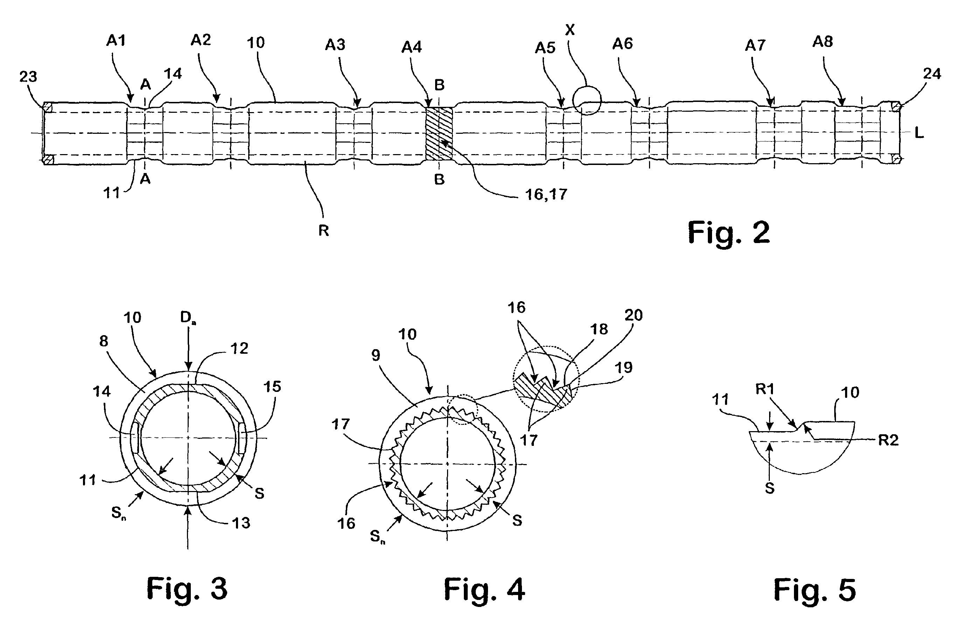

Der Außendurchmesser $D_a$ des Rohres R im Bereich der Angußabschnitte A1 - A8 ist dabei so bemessen, daß das Verhältnis des Moduls des jeweiligen Nockens N1 - N8 zum betreffenden Außendurchmesser $D_a$ 3,5 bis 5,5 beträgt. Gleichzeitig sind die freien Kantenbereiche zwischen den Seitenwänden der Nut 8,9 und dem äußeren Umfang 10 des Rohres R außerhalb des jeweiligen Angußabschnitts A1 - A8 sowie die Eckbereiche zwischen dem Nutengrund 11 und den Seitenwänden der Nut 8,9 jeweils so angerundet, daß ein fließender Übergang vom äußeren Umfang 10 des Rohres R in den Nutengrund 11 verwirklicht ist (Fig. 5). Das Verhältnis der in den Kantenbereichen bzw. den Eckbereichen angeformten Radien R1,R2 zur normalen Wandstärke $S_n$ des Rohres sollte zwischen 1 und 2 liegen.

Aufgrund der Erzeugung einer verminderten Wandstärke S im Bereich der Angußabschnitte A1 - A8 und die Ausbildung eines fließenden Übergangs vom jeweiligen Nutengrund 11 zum äußeren Umfang 10 des Rohres R im Bereich nicht verminderter Wandstärke $S_n$ wird dem Reißen der Nocken N1 - N8 nach dem Erstarren vorgebeugt. Beim Aufgießen der Nocken N1 - N8 auf das Rohr R sind im Hinblick auf die Gefahr der Entstehung von Rissen zwei kritische Phasen zu unterscheiden:

- Während des Gießens und Erstarrens der Nocke dehnt sich das Rohr R aufgrund der damit einhergehenden Erwärmung aus, während das Material der Nocken N1 - N8 aufgrund der nach dem Vergießen einsetzenden Temperaturabnahme schrumpft. Während dieser Zeitperiode sind die von Rohr R und Nocken N1 - N8 ausgehenden Kräfte einander entgegengerichtet. Ohne die erfindungsgemäß vorgenommenen Maßnahmen könnten diese Kräfte zum Reißen der Nocken N1 - N8 führen.

- Nach dem Erreichen einer maximalen Temperatur kühlt auch das Rohr R unter gleichzeitigem Schrumpfen wieder ab. Um dennoch eine sichere Verbindung zwischen den Nocken N1 - N8 und dem Rohr R zu gewährleisten, muß von diesem Zeitpunkt an die Schrumpfung der Nocken N1 - N8 im Vergleich zur Schrumpfung des Rohres R größer sein. Das Auslegungskriterium für diese Phase der Erkaltung ist die maximale Zugspannung am Innenradius der Nocken N1 - N8. Sie sollte einerseits nicht kleiner sein als 10 % und andererseits nicht höher sein als 50 % der Bruchspannung am kleinsten Querschnitt der Nocken N1 - N8.

Um einen dauerhaft sicheren Halt der angegossenen Nocken N1 - N8 auf dem Rohr zu sichern, sind die Angußabschnitte A1 - A8 zusätzlich so ausgestaltet, daß eine mindestens formschlüssige feste Verbindung zwischen den Nocken N1 - N8 und dem Rohr R gewährleistet ist.

Zu diesem Zweck sind beispielsweise im Angußabschnitt A2 an zwei gegenüberliegenden Abschnitten der Nut 8 Abflachungen 12,13 erzeugt worden, so daß die Wandstärke S des Rohres R im Bereich der Abflachungen 12,13 zusätzlich vermindert ist und der Nutengrund 11 im Querschnitt einen von der Kreisform abweichenden Verlauf aufweist. Am tiefsten Punkt der Abflachungen 12,13 ist etwa 1/4 bis 1/3 der im übrigen Bereich der Nuten 8,9 vorhandenen Wandstärke S abgetragen worden.

Zusätzlich ist in jeden der beiden zwischen den Abflachungen 12,13 liegenden Abschnitten des Nutgrundes 11 jeweils eine Sacklochsenkungen 14,15 eingeformt. Die Tiefe der Sacklöcher liegt bei 2/3 bis 3/4 der Wandstärke S. Ihr Durchmesser entspricht dem 5- bis 6-fachen der Wandstärke S.

Der sich im Angußbereich A2 um das Rohr R legende Gußwerkstoff des Nockens N2 umgibt den Nutengrund und fließt in die Sacklöcher 14,15. Aufgrund des durch die Abflachungen 12,13 bedingten ungleichförmigen Verlaufs des Nutengrundes 11 und des Eingreifens des Gußwerkstoffs in die Sacklöcher 14,15 ist eine innige formschlüssige Verklammerung des Nockens N2 und des Rohres R gewährleistet.

Eine alternative Ausgestaltung der festen Verbindung zwischen dem Rohr R und dem jeweiligen Nocken N1 - N8 ist im Bereich des Angußabschnitts A4 verwirklicht worden. Dort sind anstelle von Abflachungen oder Senkungen in abwechselnder Folge Vertiefungen 16 und Erhebungen 17 in den Nutengrund 11 eingeformt worden. Die Tiefe der Vertiefungen 16 beträgt dabei etwa 1/3 bis 1/2 der Wandstärke S. Die Flanken 18,19 der Erhebungen 17 laufen so aufeinander zu, daß an den Spitzen der Erhebungen 17 ausgeprägte, in Bezug auf die Längsachse L der Nockenwelle W schräg ausgerichtete Firstkanten 20 ausgebildet sind. Dabei umschließen die Flanken im Bereich der Firstkanten 20 einen Winkel von beispielsweise 90 °.

Beim Angießen des Nockens N4 füllt Gußwerkstoff die Vertiefungen 17. Gleichzeitig kommt es aufgrund der starken Wärmekonzentration im Bereich der Firstkanten 20 zum Aufschmelzen des Stahlwerkstoffs, aus dem das Rohr R gefertigt ist. Auf diese Weise ist der Nocken N4 nach dem Erstarren durch einen kombinierten Form- und Stoffschluß mit dem Rohr R verbunden.

Als Werkstoff für das Gießen der Nocken N1 - N8 wird eine Eisengußlegierung verwendet, die neben Eisen und den üblichen unvermeidbaren Verunreinigungen die in der folgenden Tabelle angegebenen Legierungsbestandteile aufweist:

| C | Si | La | S | O | Mn | Cr | Cu | Mo | Ti |
|---|----|----|----|----|----|----|----|----|----|
| 3,69 | 0,95 | 0,05 | 0,029 | 0,0035 | 0,29 | 0,5 | 0,2 | 0,51 | 0,022 |

Nach dem Erschmelzen des Gießwerkstoffs wird dieser über den zentralen Versorgungskanal 2 auf die Zuläufe 3,4 verteilt und strömt von diesen über die Anschnitte 5, die Speiserhälse 7 und die Speiser 6 in die jeweilige Hohlform, so daß die Nocken N1 - N8 an das in der Gießform 1 liegende Rohr R angeformt werden. Dabei ist dadurch, daß die Versorgung der Untergruppen P1,P2,P3,P4 von Nockenpaaren N1,N2;N3,N4;N5,N6;N7,N8 in abwechselnder Reihenfolge über die Zuläufe 3,4 erfolgt, sichergestellt, daß die fertig hergestellte Nockenwelle W keinen übermäßigen Verzug aufweist.

Nachdem die Nocken N1 - N8 fertig erstarrt sind, wird die Nockenwelle W aus der Gießform 1 entnommen. Anschließend werden in einer nicht dargestellten Schweißmaschine an die beiden Enden des Rohres R Endstücke 20,21 durch Buckelverschweißung angeschlossen. Zu diesem Zweck sind an den endseitigen Rändern des Rohres R umlaufende Buckel 23,24 ausgeformt, die das Material für die Schweißnaht zwischen dem jeweiligen Endstück 20 bzw. 21 und dem Rohr R zur Verfügung stellen.

**BEZUGSZEICHEN**

| 1 | Gießform | A1–A8 | Angußabschnitte |
|---|---|---|---|
| 2 | zentraler Versorgungskanal | $D_a$ | Außendurchmesser des Rohres R |
| 3,4 | Zuläufe | G1 | Gruppe von Nocken N1,N2,N5,N6 |
| 5 | Speiserhälse | G2 | Gruppe von Nocken N3,N4,N7,N8 |
| 6 | Speiser | L | Längsachse der Nockenwelle W |
| 6a | Entlüftungsöffnungen | N1–N8 | Nocken |
| 7 | Anschnitte | R | Rohr |
| 8,9 | Nuten | P1,P2, P3,P4 | Untergruppen |
| 10 | äußerer Umfang des Rohres R im Bereich nicht verminderter Wandstärke $S_n$ | R1,R2 | im Kantenbereich bzw. den Eckbereichen |
| 11 | Nutengrund | S | Wandstärke im Bereich der Angußabschnitte |
| 12,13 | Abflachungen | $S_n$ | Wandstärke des Rohres R außerhalb der Angußabschnitte A1–A8 |
| 14,15 | Sacklochsenkungen | W | Nockenwellen |
| 16 | Vertiefungen | | |
| 17 | Erhebungen | | |
| 18,19 | Flanken | | |
| 20 | Firstkanten der Erhebungen 17 | | |
| 21,22 | Endstücke | | |
| 23,24 | Buckel | | |

**Patentansprüche**

1. Verfahren zum Herstellen einer Nockenwelle (W), bei dem Nocken (N1 - N8) aus einem Gießwerkstoff von außen an ein hohl bleibendes, vorgefertigtes Rohr (R) angegossen werden.

2. Verfahren nach Anspruch 1, **dadurch gekennzeichnet, daß** die Nocken (N1 - N8) in mindestens zwei Gruppen (G1,G2) mit einer gleichen Anzahl von Nocken (N1 - N8) aufgeteilt werden und daß die Nocken (N1,N2,N5,N6) der einen Gruppe (G1,G2) gemeinsam über einen ersten Zulauf (3) und die Nocken (N1 - N8) der anderen Gruppe (N3,N4,N7,N8) gemeinsam über einen zweiten Zulauf (4) mit Gießwerkstoff versorgt werden.

3. Verfahren nach einem der voranstehenden Ansprüche, **dadurch gekennzeichnet, daß** die Nocken (N1 - N8) der Gruppen (G1,G2) in Untergruppen (P1 - P4) aufgeteilt sind und daß benachbart zu jeder Untergruppe (P1,P3) der einen Gruppe (G1) mindestens eine Untergruppe (P2,P4) der anderen Gruppe (G2) positioniert ist.

4. Verfahren nach Anspruch 3, **dadurch gekennzeichnet, daß** die Untergruppen (P1 - P4) durch jeweils ein Paar von benachbart zueinander angeordneten Nocken (N1 - N8) gebildet sind.

5. Verfahren nach einem der Ansprüche 3 oder 4, **dadurch gekennzeichnet, daß** die Untergruppen (P1,P3) der einen Gruppe (G1) und die Untergruppen (P2,P4) der anderen Gruppe (G2) abwechselnd aufeinander folgend längs des Rohres (R) angeordnet sind.

6. Verfahren nach einem der voranstehenden Ansprüche, **dadurch gekennzeichnet, daß** das Rohr (R) an seinen Enden während des Gießens jeweils über eine mindestens dem Doppelten ihres Außendurchmessers ($D_a$) entsprechende Länge gehalten wird.

7. Verfahren nach einem der voranstehenden Ansprüche, **dadurch gekennzeichnet, daß** mit dem Rohr (R) nach dem Gießen mindestens ein Endstück (21,22) durch Buckelschweißung verbunden wird.

8. Eisengußlegierung zum von außen erfolgenden Angießen von Nocken (N1 - N8) an ein hohl bleibendes Rohr (R), die neben Eisen und üblichen Verunreinigungen (in Gewichts-%)

   C: 3,5 - 3,7 %,
   Si: 0,9 - 1,1 %,
   S: ≤ 0,15 %,
   Mn: ≤ 1 %,

   sowie nicht an Schwefel gebundenes La mit einem Anteil von 0,02 - 0,05 % aufweist
   und
   wahlweise eines oder mehrere der folgenden Legierungselemente enthält:

   Cr: 0,3 - 0,6 %,
   Cu: 0,1 - 1,0 %,
   Mo: 0,3 - 0,6 %,
   Ti: 0,02 - 0,05 %.

9. Eisengußlegierung nach Anspruch 8, **dadurch gekennzeichnet, daß** der SchwefelGehalt der Eisengußlegierung auf höchstens 0,03 Gew.-% beschränkt ist.

10. Eisengußlegierung nach einem der Ansprüche 8 oder 9, **dadurch gekennzeichnet, daß** die Eisengußlegierung höchstens 0,007 Gew.-% Sauerstoff aufweist.

11. Vorrichtung zur Herstellung einer Nockenwelle (W), bei der die Nocken (N1 - N8) an ein hohles Rohr (R) angegossen sind, mit einer aus einem Ober- und einem Unterkasten gebildeten Gießform (1), in der mittels eines Formstoffs, insbesondere Formsand, eine Aufnahme für ein vorgefertigtes Rohr (R) und die Hohlformen für die an das Rohr (R) anzugießenden Nocken (N1 - N8) ausgebildet sind, wobei die Hohlformen in mindestens zwei Gruppen von gleicher Anzahl aufgeteilt sind und die jeweils einer dieser Gruppen zugeordneten Hohlformen gemeinsam über einen Zulauf (3,4) mit Gießwerkstoff versorgt werden.

12. Vorrichtung nach Anspruch 11, **dadurch gekennzeichnet, daß** jeder Hohlraum über Anschnitte (5), Speiser (6) und Speiserhälse (7) mit dem ihm zugeordneten Zulauf (3,4) verbunden ist.

13. Vorrichtung nach Anspruch 12, **dadurch gekennzeichnet, daß** jeder Hohlraum über eine auf der dem jeweiligen Speiser (6) gegenüberliegenden Seite des Rohres (R) angeordneten Entlüftungsöffnung (6a) entlüftbar ist.

14. Vorrichtung nach einem der Ansprüche 11 bis 13, **dadurch gekennzeichnet, daß** die Hohlräume jeder Gruppe in Untergruppen aufgeteilt sind und daß benachbart zu jeder Untergruppe der einen Gruppe mindestens eine Untergruppe der anderen Gruppe positioniert ist.

15. Vorrichtung nach Anspruch 14, **dadurch gekennzeichnet, daß** die Untergruppen durch jeweils ein Paar von benachbart angeordneten Hohlräumen gebildet sind.

16. Vorrichtung nach einem der Ansprüche 14 oder 15, **dadurch gekennzeichnet, daß** die Untergruppen der einen Gruppe und die Untergruppen der anderen Gruppe abwechselnd aufeinander folgend längs des Rohres (R) angeordnet sind.

17. Vorrichtung nach einem der Ansprüche 11 bis 16, **dadurch gekennzeichnet, daß** das Rohr (R) in der Aufnahme der Gießform (1) an ihren Enden über eine mindestens dem Doppelten ihres Außendurchmessers ($D_a$) entsprechende Länge von Formstoff umgeben ist.

18. Vorrichtung nach einem der Ansprüche 12 bis 17, **dadurch gekennzeichnet, daß** das Modul jedes Speisers (6) mindestens gleich dem Doppelten des Moduls der ihm zugeordneten, an das Rohr (R) anzugießenden Nocke (N1 - N8) ist.

19. Vorrichtung nach einem der Ansprüche 12 bis 18, **dadurch gekennzeichnet, daß** die Speiser (6) in Richtung des jeweiligen Hohlraums sich konisch aufweitend ausgebildet sind.

20. Vorrichtung nach einem der Ansprüche 12 bis 19, **dadurch gekennzeichnet, daß** der Modul des Speiseranschnitts (5) kleiner ist als der Modul der ihm zugeordneten, an das Rohr (R) anzugießenden Nocke (N1 - N8).

21. Nockenwelle, deren Nocken (N1 - N8) an ein hohl bleibendes Rohr (R) angegossen sind.

22. Nockenwelle nach Anspruch 21, **dadurch gekennzeichnet, daß** an dem Rohr (R) radial umlaufende Angußabschnitte (A1 - A8) für die Nocken (N1 - N8) ausgebildet sind.

23. Nockenwelle nach Anspruch 22, **dadurch gekennzeichnet, daß** im Bereich der Angußabschnitte (A1 - A8) in das Rohr (R) jeweils eine Nut (8,9) eingeformt ist, um die Wandstärke (S) des Rohres (R) im Bereich der Angußabschnitte (A1 - A8) zu vermindern.

24. Nockenwelle nach Anspruch 23, **dadurch gekennzeichnet, daß** das Verhältnis des Erstarrungsmoduls der Nocken (N1 - N8) zum Durchmesser des Rohres (R) im Bereich des jeweiligen Angußabschnitts (A1 - A8) 3,5 bis 5,5 beträgt.

25. Nockenwelle nach Anspruch 23 oder 24, **dadurch gekennzeichnet, daß** der Umfang (10) des Rohres (R) außerhalb der Angußabschnitte (A1 - A8) fließend in den Grund (11) der Angußabschnitte (A1 - A8) übergeht.

26. Nockenwelle nach einem der Ansprüche 22 bis 25, **dadurch gekennzeichnet, daß** der äußere Umfang des Rohres (R) im Bereich der Angußabschnitte (A1 - A8) im Querschnitt einen von der Kreisform abweichenden Verlauf aufweist.

27. Nockenwelle nach Anspruch 26, **dadurch gekennzeichnet, daß** im Bereich der Angußabschnitte durch Abtrag von Werkstoff am Umfang des Rohres (R) jeweils mindestens eine Abflachung (12,13) ausgebildet ist.

28. Nockenwelle nach Anspruch 27, **dadurch gekennzeichnet, daß** die Tiefe der Abflachung (12,13) gegenüber dem nicht abgeflachten Umfang des Rohres (R) im Bereich der Angußabschnitte (A1 - A8) 1/4 bis 1/3 der Wandstärke (S) des Rohres (R) im nicht abgeflachten Bereich der Angußabschnitte (A1 - A8) beträgt.

29. Nockenwelle nach einem der Ansprüche 21 bis 28, **dadurch gekennzeichnet, daß** im Bereich der Angußabschnitte (A1 - A8) Sacklocheinsenkungen (14,15) von außen in das Rohr (R) eingeformt sind.

30. Nockenwelle nach Anspruch 29, **dadurch gekennzeichnet, daß** die Tiefe der Sacklochbohrungen (14,15) gegenüber dem nicht abgeflachten Umfang des Rohres (R) im Bereich der Angußabschnitte (A1 - A8) 2/3 bis 3/4 der Wandstärke (S) des Rohres (R) im nicht abgeflachten Bereich der Angußabschnitte (A1 - A8) beträgt.

31. Nockenwelle nach Anspruch 21 bis 30, **dadurch gekennzeichnet, daß** im Bereich der Angußabschnitte (A1 - A8) sich im wesentlichen über die Breite der Angußabschnitte (A1 - A8) erstreckende und über den Umfang des Rohres (R) verteilte Vertiefungen (16) in das Rohr (R) eingeformt sind.

**32.** Nockenwelle nach Anspruch 31, **dadurch gekennzeichnet, daß** zwischen den Vertiefungen (16) jeweils spitz zulaufende Erhebungen (17) ausgebildet sind.

**33.** Nockenwelle nach einem der Ansprüche 31 oder 32, **dadurch gekennzeichnet, daß** die Tiefe der Vertiefungen (16) gegenüber dem nicht abgeflachten Umfang des Rohres (R) im Bereich der Angußabschnitte (A1 - A8) 1/3 bis 1/2 der Wandstärke (S) des Rohres (R) im nicht abgeflachten Bereich der Angußabschnitte (A1 - A8) beträgt.

Fig. 1

EP 1 213 071 A2

Fig. 2

Fig. 3

Fig. 4

Fig. 5

EP 1 213 071 A2

Fig. 6

21    R    N1

**Fig. 7**

23

N8    24    22

**Fig. 8**

R

14    N1

12

R    13

15

**Fig. 9**

R    N4

**Fig. 10**